Europäisches Patentamt

European Patent Office

Office européen des brevets

(11) Publication number: **0 425 182 A1**

## EUROPEAN PATENT APPLICATION

(21) Application number: 90311380.1

(51) Int. Cl.5: **H02K 15/00, H02K 5/15**

(22) Date of filing: 17.10.90

(30) Priority: **23.10.89 US 425653**

(43) Date of publication of application:
**02.05.91 Bulletin 91/18**

(84) Designated Contracting States:
**DE FR GB IT**

(71) Applicant: **UNITED TECHNOLOGIES ELECTRO SYSTEMS INCORPORATED**
P.O. Box 109600
West Palm Beach, Florida 33410-9600(US)

(72) Inventor: **Roberts, Ronald C.**
5170 Westcombe
West Bloomfield, Michigan 48033(US)
Inventor: **Hillyer, Michael J.**
P.O. Box 487
Carrollton, Alabama 35447(US)

(74) Representative: **Gilding, Martin John**
Eric Potter & Clarkson St. Mary's Court St.
Mary's Gate
Nottingham NG1 1LE(GB)

(54) **Electric motor.**

(57) For the purposes of holding an electric motor armature in position during shipment, a special removable end cap (22) is used. The end cap receives one end of the motor armature shaft (14) with an arrangement of lateral support bearings (32) and washers (34) and a special O-ring (28) which cooperates with a tapered annular seat (14c) on the motor armature shaft. If the shaft moves axially during shipment, the O-ring expands outwardly acting as a brake to prevent rotation of the armature.

## FIG.1

# ELECTRIC MOTOR

## Technical Field

This invention relates to electric motors in general and specifically to techniques for securing electric motor armatures during shipment.

## Background Art

In many electric motor applications, the device or component, such as a pump, that the motor actuates also serves as one end of the motor cap or end fitting. Motor manufacturers often provide the motor housing, the armature with the brush rigging, one fully functional end cap and one non-operational end cap, the latter merely serving to hold the armature in place during shipping and handling. That non-operational end cap sometimes being referred to as the "shipping cap". The typical shipping cap is molded of plastic and serves only to support the end of the armature until the time that the motor is assembled to the device it powers. To economize, the shipping cap is used over and over by the manufacturer. Once it is removed, which takes place just prior to final assembly of the motor and to the device, special care must be taken to insure that the armature is not moved in such a way that the brushes slip off the commutator. If that happens, the motor has to be completely reassembled which can be complicated. Undetected damage to the brushes, brush holder, brush springs and commutator, can also occur all as a result of the inadvertent movement of the armature after the shipping cap is removed.

## Disclosure of Invention

One of the objects of the present invention is to provide an improved technique for securing the motor armature in place during shipment.

According to the invention, the end cap or commutator end cap and the end of the motor armature cooperate in such a way that if the armature is moved axially, it is held rotationally in position.

According to the invention, positive pressure is required to install and remove the shipping cap.

According to the present invention, the end of the motor armature that is placed in the commutator end cap has a tapered annular race that receives an O-ring. The O-ring is placed on the shaft which is then inserted through a bearing and a felt washer into a cavity in the holding cap. The taper of the groove is such that the O-ring will ride up on the taper if the shaft moves away from the cap. This lodges the O-ring in a space between the cap and the cavity locking the shaft securely in place.

Insertion of the O-ring into the cap requires noticeable force, as does removal of the cap from the shaft, making it difficult for someone to accidentally remove the end cap (dislodge the motor brushes). Not only does an end cap embodying the present invention prevent inadvertent disassembly of the armature and the associated brush assemblies, it prevents rotation of the motor armature shaft as the cap is removed: this prevents needless commutator rotations during assembly of the device powered by the motor it drives.

## Brief Description of Drawings

Fig. 1 is a cross-sectional view of a typical DC motor which contains a commutator end cap embodying the present invention.

Fig. 2 is an enlarged view of the area 1A in Fig. 1.

## Best Mode for Carrying Out the Invention

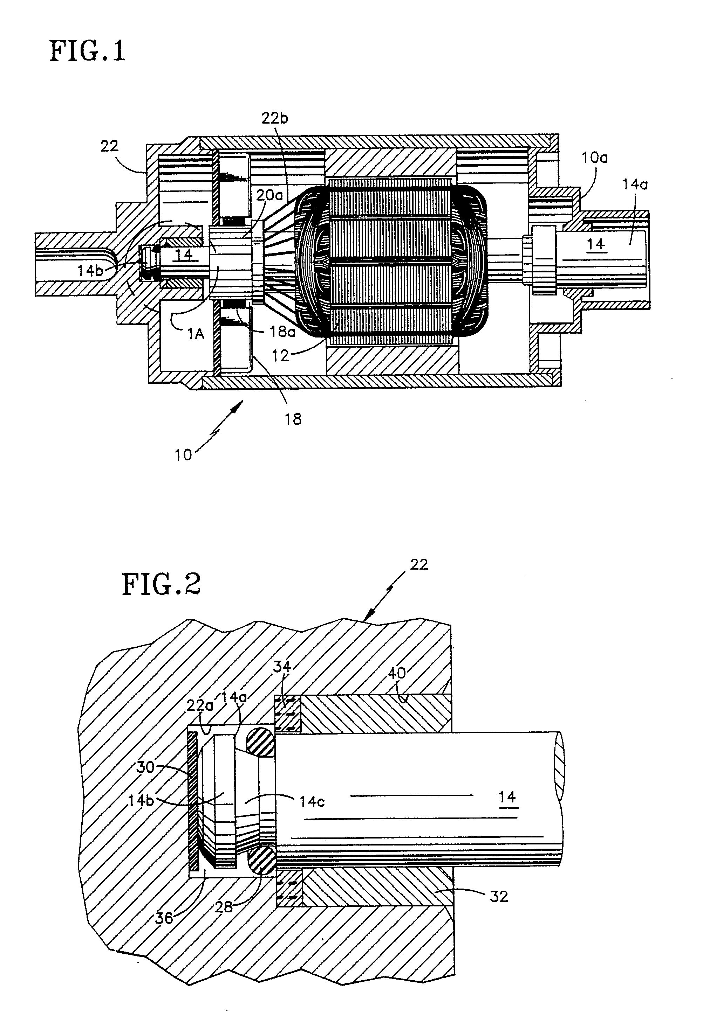

Referring to Fig. 1, reference numeral 10 identifies, in general, a rather typical DC electric motor. The motor contains an armature 12 which contains an armature shaft 14, an end 14a of which is supported during shipping by a "shipping cap" 10a. Reference numeral 18 identifies a typical brush cage, which contains a plurality of brushes 18a that contact a commutator 20a which is connected by wires 22b that form the armature.

Reference numeral 22 identifies a commutator end cap which, in cooperation with the end of the shaft, shown generally as reference numeral 14b embodies the present invention. The shipping cap 10a is inserted onto the end of the case 10 to allow the motor to be shipped. The shipping cap is removed to allow the shaft end 14a to be mated with an object such as a pump or fan driven by the motor. It is normally this operation which poses the greatest threat of the commutator slipping off the brushes.

Fig. 2, which is an enlargement of the area 1A in Fig. 1, shows that the shaft end 14b contains a tapered area annular race 14c in which there is an O-ring 28. The shaft end 14b rests against a light plastic thrust bearing 30, and a bearing 32 supports shaft 14. A felt washer 34 and bearing 32, which surrounds the shaft, cooperates with the O-ring to prevent the shaft from being easily removed from the end cap.

The end cap is installed by inserting the thrust bearing 30 in the cavity 36; then the washer 34 is placed in the larger diameter cavity (shown generally by reference numeral 40) and then the bearing 32 is inserted on top of the washer 34. The flexible O-ring (neoprene) is pushed over the end 14a into the race 14c. Then the shaft is pushed into the bearing 32. Some resistance is encountered because the combined diameter of the shaft and O-ring is slightly greater than the inner diameter of the bearing and washer. The felt washer 34 has the same diameter as the bearing 32, which has an inner diameter equaling the shaft diameter. When the O-ring passes beyond the washer 34 it "snaps" into place within the cavity 36. Continued pushing of the shaft ultimately causes it to engage the thrust bearing 30. In this position, the shaft 14 is not intended to be removed from the "commutator end cap" for the life of the motor.

To remove the shaft requires pressure to cause the O-ring to retract sufficiently to pass outwardly within the washer 34 and bearing 32. It should be noticed that because of the taper of the area 14c when the cap is removed from the shaft, the O-ring will ride up towards end 14b as a result of which it will engage the walls 22a. By engaging the walls this way, the O-ring prevents the shaft from rotating or moving axially as the shipping cap is removed.

Since specific palpable force is required to cause shaft with the O-ring to pass through the washer and the bearing, inadvertent disassembly (removal of the end cap) is impossible. Furthermore, by preventing rotation of the shaft as the shipping cap is removed, inadvertent damage to the commutator and brushes is prevented. While an O-ring is preferred, similar expandable ring devices such as a "garter" spring may be a substitute.

The foregoing has been a discussion of the best mode for carrying out the invention: One skilled in the art, however, will, with the benefit of the foregoing, be able to make modifications and variations in whole or in part to the discussed embodiment without departing from the true scope and spirit of the invention.

## Claims

1. A method of assembling an electric motor that has an armature shaft within a case comprising the steps of:
placing an expandable ring on one end of the shaft;
inserting a shaft end with the O-ring thereon into a dual diameter cavity in an end cap that attaches to the case, said cavity compressing the ring as the shaft end is inserted to a first position and then allowing the ring to expand when the shaft end is at a second position, at which the end cap is in a position to engage the case, and the shaft is prevented by said ring from rotating.

2. The method described in claim 1, further characterized in that the expandable ring is a neoprene O-ring and the one end of the shaft contains a tapered race to receive the O-ring to cause the O-ring to expand and contact the case as the one end is removed from the cap.

3. The method of claims 1 and 2 characterized in that the dual diameter cavity is defined by a bearing which presses against a washer in a cavity in the cap; the diameter of the cavity is approximately the same as the outer diameter of the bearing and the washer; the bearing and washer extending only partially into the cavity, and the inner diameter of the bearing and the washer are approximately the same as the shaft diameter.

4. An electric motor having an armature shaft in a case and a temporary end cap on one end of the case supporting one end of the armature shaft, characterized in that:
the armature shaft contains an annular race;
an O-ring rests in the annular race;
the O-ring rests in a cavity in the end cap;
the cavity contains a bearing assembly that supports the shaft;
the diameter of the O-ring is greater than the shaft, and
the annular race is such that it causes the O-ring to engage the bearing assembly and shaft when the shaft is thrust in one axial direction but not the opposite direction thereof, the engagement between the O-ring, shaft and bearing assembly preventing shaft rotation.

5. An electric motor as described in claim 4, characterized in that the end of the shaft engages a non-metallic thrust bearing in the cavity.

6. An electric motor as described in claims 4 or 5, characterized in that the annular race is tapered to cause the O-ring to expand as the armature shaft is withdrawn from the cavity and the O-ring is forced against the bearing assembly.

**FIG.1**

**FIG.2**

# DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | PATENT ABSTRACTS OF JAPAN vol. 10, no. 205 (E-420)(2261) 17 July 1986, & JP-A-61 046140 (MATSUSHITA ELECTRIC IND. CO. LTD.) 06 March 1986, * the whole document * | 1,4 | H 02 K 15/00 H 02 K 5/15 |
| A | DE-A-2 620 142  (FORD-WERKE AG) * page 6, line 21 - page 7, line 3; figures 1, 3 * | 1,4,6 | |
| A | DE-B-2 519 023  (STEPHAN-WERKE GMBH & CO.) * column 4, lines 2 - 29; figures 1-4 * | 1,4 | |
| A | DE-A-3 300 574  (PAPST-MOTOREN GMBH & CO. KG) * page 10, lines 9 - 24; figure 1 * | 4 | |
| A | DE-A-2 016 802  (ROTRON INC.) * page 6, line 33 - page 7, line 9; figures 1, 2 * | 1,4 | |
| A | PATENT ABSTRACTS OF JAPAN vol. 1, no. 153 (E-77)(8122) 08 December 1977, & JP-A-52 095010 (MATSUSHITA DENKO K.K.) 08 October 1977, * the whole document * | 5 | TECHNICAL FIELDS SEARCHED (Int. Cl.5) H 02 K F 16 B |

The present search report has been drawn up for all claims

| Place of search | Date of completion of search | Examiner |
|---|---|---|
| Berlin | 15 January 91 | LEOUFFRE M. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

& : member of the same patent family, corresponding document